Europäisches Patentamt

(19) European Patent Office

Office européen des brevets

(11) Numéro de publication: **0 085 074**

**B1**

(12) **FASCICULE DE BREVET EUROPÉEN**

(51) Int. Cl.⁴: **H 02 H 9/04,** H 02 H 3/33

(45) Date de publication du fascicule du brevet:
**15.01.86**

(21) Numéro de dépôt: **82902353.0**

(22) Date de dépôt: **05.08.82**

(86) Numéro de dépôt international:
**PCT/FR 82/00130**

(87) Numéro de publication internationale:
**WO 83/00586 (17.02.83 Gazette 83/05)**

(54) **DISPOSITIF DE PROTECTION CONTRE LA SURTENSION DANS UN RESEAU DE DISTRIBUTION ELECTRIQUE.**

(30) Priorité: **12.06.81 FR 8115710**

(43) Date de publication de la demande:
**10.08.83 Bulletin 83/32**

(45) Mention de la délivrance du brevet:
**15.01.86 Bulletin 86/3**

(84) Etats contractants désignés:
**CH DE GB LI SE**

(56) Documents cité:
**FR-A-2 417 874**
**FR-A-2 470 466**
**GB-A-1 300 870**

**A.T.E. Journal, volume 16, No. 4, October 1960
(Liverpool, GB) Blackmore et al. "Lightning
protection for transistor repeaters" pages 153 to 168**

(73) Titulaire: **Girard, François Marie, 29 Rue Eugène
Bussière, F-21000 Dijon (FR)**

(72) Inventeur: **Girard, François Marie, 29 Rue Eugène
Bussière, F-21000 Dijon (FR)**

## Description

La présente invention concerne les seules surtensions induites sur le réseau basse tension de distribution d'énergie.

Ces surtensions sont dues à trois causes : — effets selfiques lors de coupures brusques d'appareils puissants (postes à souder par exemple) : l'énergie est importante lorsque l'appareil en cause est puissant et a un fonctionnement défectueux. Elles peuvent entraîner la destruction d'appareils électroniques non protégés. — moteurs électriques : les à coups de fonctionnement et des démarrages brusques peuvent créer des surtensions mais là encore celles-ci ne sont vraiment dangereuses que lorsque le moteur est puissant et qu'il a un fonctionnement défectueux (marche sur deux phases par exemple). — foudre : ce sont les surtensions les plus redoutables, l'énergie mise en jeu est considérable. La décharge électrostatique s'effectuant à proximité ou sur une ligne basse tension, engendre une onde de choc de haute énergie dont le front de montée peut être de 100.000 V/µS. Suite à un coup de foudre les éclateurs de poteaux peuvent laisser sur la ligne basse tension des surtensions de plus de 1000 V pendant plusieurs secondes.

Il est bien connu que les transistors supportent très mal les surtensions même très brèves. Les circuits intégrés pour lesquels les pastilles actives ont des dimensions très réduites sont encore plus sensibles. Les nouvelles technologies (M O S par exemple) qui accroissent les temps de réponse rendent les circuits électroniques encore plus sensibles à des surtensions de faible énergie, de fort voltage, de durée très courte (nano seconde).

En outre, l'environnement électrique d'un circuit intégré dans un ensemble électronique peut atténuer ou renforcer la surtension. Un appareil électronique branché sur le courant secteur comporte toujours une alimentation spéciale pour les éléments actifs de l'électronique et le circuit intégré est connecté par différentes résistances, condensateurs, selfs, aux entrées-sorties, qui peuvent elles-mêmes être connectées à l'alimentation. Cet ensemble va donc créer une impédance qui va s'opposer plus ou moins à la surtension.

Les résistances seules s'opposent très efficacement aux surtensions, elles constitueraient même à partir de 1000 OHM une protection très efficace pour les surtensions de faible énergie.

Mais l'alimentation des circuits intégrés n'est bien souvent séparée du transformateur, abaisseur de tension que par des diodes et une résistance de faible valeur. Or, il est connu qu'un transformateur laisse passer les surtensions et parfois même les amplifie.

Les appareils électroniques domestiques sont donc très sensibles aux surtensions.

Les surtensions sur le courant secteur apparaissent entre phases, entre phase et neutre, entre phase et terre, entre neutre et terre.

La seule façon pour que la surtension qui chemine en suivant le conducteur électrique n'atteigne pas l'appareil sensible est de disposer un élément entre le conducteur et la terre et de faire en sorte que cet élément devienne conducteur à partir d'un certain seuil de tension.

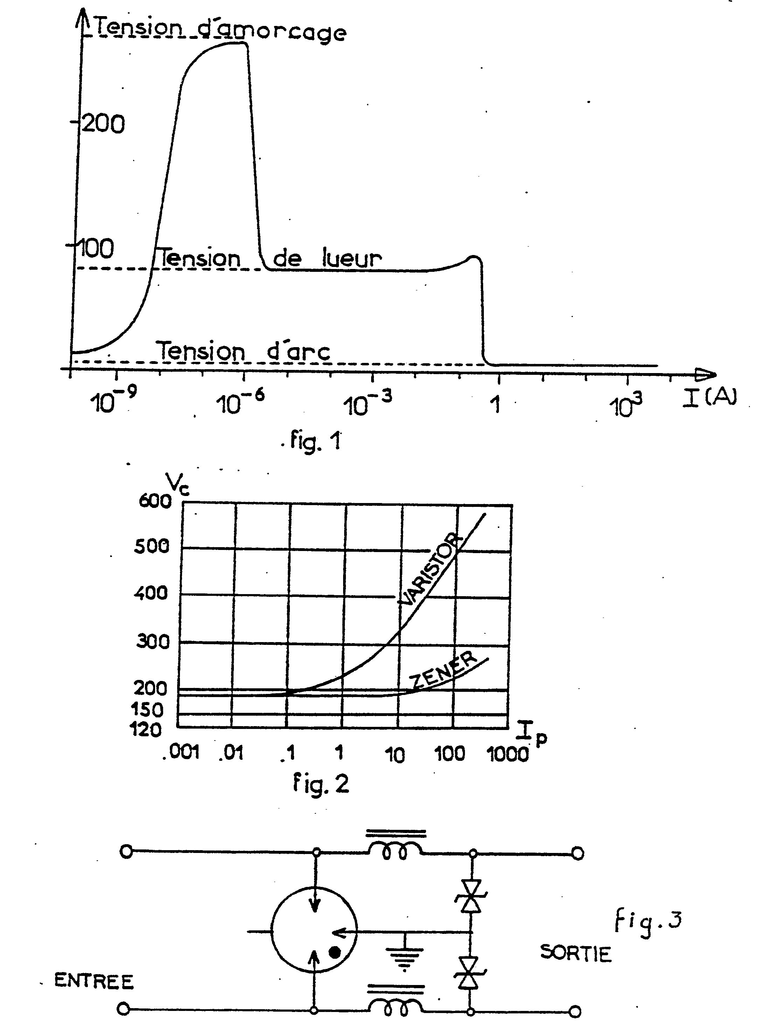

Trois grandes familles de matériels sont à cet égard déjà utilisées : — les parafoudres à gaz : l'ionisation d'un gaz (dopé ou non) établit un courant à travers le parafoudre ce qui fait chuter la tension en aval de celui-ci. La courbe de décharge (fig. 1) montre la lenteur de l'amorçage d'un tel dispositif, qui seul, est par conséquent impropre à la protection de l'électronique. Par contre, il peut écouler des courants de plusieurs centaines de milliers d'ampèrespendant plusieurs milliseopposecondes, ce qui représente une énergie d'absorbtion considérable et l'indiquerait particulièrement pour une protection contre la foudre. — les varistors à l'oxyde de zinc (fig. 2) : l'élément varistor devient conducteur à partir d'une certaine tension. Il oppose une résistance de plus en plus faible à une tension de plus en plus forte. Il est plus rapide que le parafoudre à gaz (1000 V/µS) et bon marché mais il a l'énorme inconvénient de se détériorer petit à petit à chaque surtension. Son pouvoir d'écoulement (courant maxi écoulé à terre) n'est pas très grand.

— Les diodes Zener : ces diodes Zener de fabrication spéciale ont le même type de fonctionnement que toutes les diodes Zener ; la jonction devient conductrice lorsque la tension à laquelle elle est soumise a accumulé suffisamment de charges pour franchir la barrière de potentiel. (fig. 2) Il s'agit d'un semi-conducteur on peut donc obtenir un temps de réponse excellent ($10^6$ V/µS). La diode ne s'use pas comme un varistor à chaque absorbtion mais son pouvoir d'écoulement est très faible.

Tous les constructeurs cherchent à combiner les différents avantages de ces trois familles de composants, et il existe de nombreuses versions de combinaisons des varistors et des éclateurs. Ces combinaisons ne sont pas toujours très efficaces pour l'électronique (temps de réponse insuffisant) et gardent le principal inconvénient du varistor à savoir sa durée de vie limitée. Ces combinaisons restent d'un prix très abordable.

La combinaison d'un parafoudre à gaz et d'une diode Zener est séduisante quant aux perfomances, mais exige l'adjonction d'une self retardatrice (fig. 3) pour éviter que la zéner reçoive l'onde avant l'amorçage du parafoudre. En effet, le temps de réponse de la zéner étant 100.000 fois plus bref que celui du parafoudre, celle-là sera détruite avant l'amorçage de celui-ci.

Dans le cas de la protection contre les surtensions induites sur le secteur, l'adjonction de la self entraîne un surcoût prohibitif. La totalité du courant de l'installation doit en effet traverser la self. La chute de tension dans la self ainsi que ses dimensions ajoutent encore aux inconvénients.

Le document FR-A-2 470 466 décrit un dispositif de protection contre la surtension dans un réseau de distribution électrique. Ce dispositif est destiné à protéger un appareil sensible aux surtensions et il comprend un circuit d'éléments disruptifs et un disjoncteur différentiel. Le circuit d'éléments disruptifs comprend des éléments qui peuvent être des tubes à décharge de type connu, ou des éléments à semi-conducteurs tels que des diodes à effet Zener. Les éléments disruptifs sont connectés entre chacun des fils d'alimentation et la terre. Dans le cas d'une surtension d'énergie faible apparaissant sur les fils d'alimentation, celle-ci est écoulée à la terre par les éléments disruptifs. Dans le cas ou la durée de la surtension est suffisamment longue, la durée de conduction de l'élément disruptif concerné devient prohibitive et le disjoncteur différentiel bascule et interrompt l'alimentation de l'ensemble éléments disruptifs — appareil protégé. Il en va de même lorsqu'un élément disruptif se met en court-circuit définitif lors de l'apparation d'une surtension. Cependant cette mise en court-circuit définitif ne se produit normalement pas avec les diodes Zener courantes. Les diodes à effet Zener courantes que l'on trouve sur le marché se détruisent par fusion de la pastille dans un premier temps. Ceci réalise une connexion des deux disques de métal contigus à la pastille. Cette connexion n'est pas de bonne qualité et les courants très élevés developpés (10 000 A) provoquent une micro-explosion de cette connexion ce qui interrompt le circuit de décharge. Ce phénomène normal est décrit dans FR-A-2 417 874 (page 6 lignes 13 à 21). Suivant l'importance de la surtension cette micro explosion se produira avant ou après le déclenchement de disjoncteur différentiel. Lorsque le circuit est couvert avant le déclenchement du disjoncteur différentiel, le dispositif ne remplit pas sa mission puisque la surtension n'est plus écoulée, elle va donc s'appliquer à l'appareil à protéger.

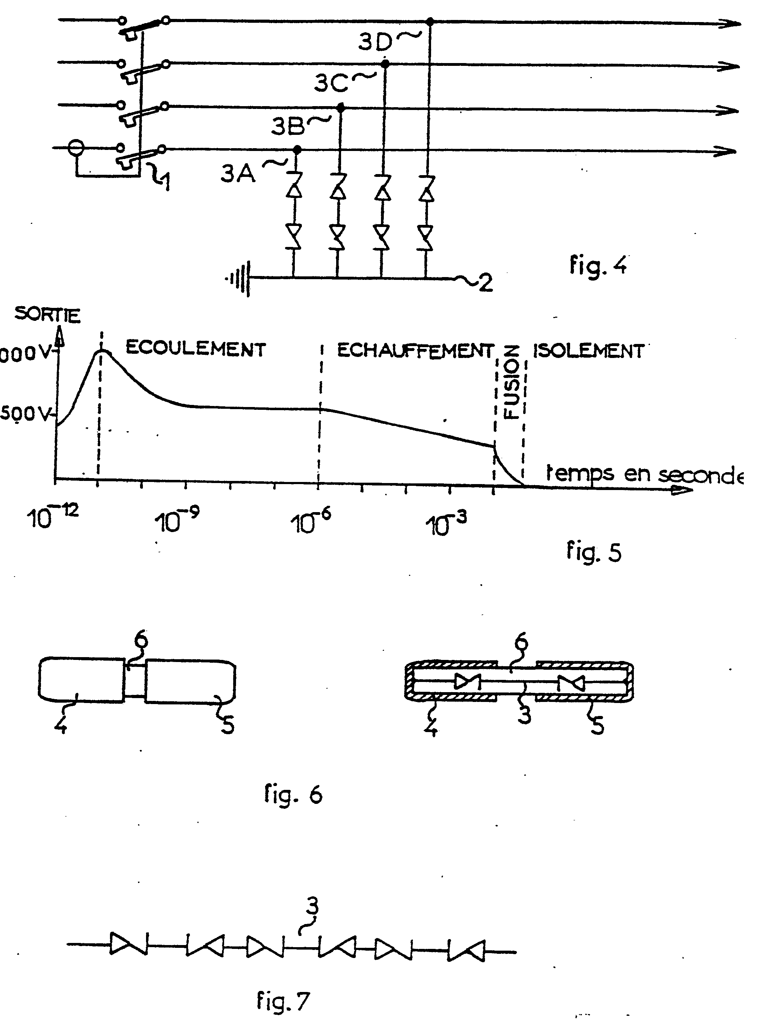

La présente invention est un dispositif de protection contre la surtension dans un réseau de distribution électrique, comprenant des diodes Zener, montées entre chacun des conducteurs du réseau et la terre, ainsi qu'un disjoncteur différentiel, caractérisé en ce que les diodes Zener présentent un temps de réponse rapide et sont telles qu'une surtension de forte énergie sur ledit réseau électrique provoque nécessairement la soudure des diodes Zener qui l'écoulent vers la terre par fusion de leur pastille semiconductrice et que l'allure de la tension existant aux bornes de ces diodes est dans ce cas du type représenté sur la figure 5 des dessins, de telle sorte que le courant écoulé vers la terre après fusion des diodes Zener est supérieur au seuil de déclenchement du disjoncteur différentiel.

La Figure 1 représente la courbe tension-courant d'un tube à décharge.

La Figure 2 représente les courbes tension-courant d'une varistance et d'une diode Zener.

La Figure 3 montre un circuit réalisant une association de tube à décharge et de diode Zener.

La Figure 4 est le schéma du dispositif selon l'invention.

La Figure 5 montre l'allure de la tension aux bornes de diodes Zener choisies selon l'invention.

La Figure 6 montre une réalisation amovible selon l'invention.

La Figure 7 montre une réalisation réalisant l'empilage de 6 diodes Zener montées tête-bêche.

La figure 4 montre un ensemble de protection suivant l'invention : il s'agit, ici, d'un réseau triphasé comportant un neutre. Ce réseau comprend en amont un disjoncteur différentiel 1 suivi par quatre dérivations vers un fil de terre 2, chacune des dérivations 3A—3B—3C—3D comprenant un groupe de diodes Zener en montage "tête-bêche".

Une surtension de faible énergie unduite sur les conducteurs sera écoulée par les diodes Zener à l terre 2. Une surtension de forte énergie sera écoulée dans un premier temps par les diodes Zener jusqu' à fusion de celle-ci. Au moment de la fusion le courant à la terre devient supérieur au seuil de déclenchement du disjoncteur différentiel et celui-ci en déclenchant isole le réseau à protéger. Le choix des zéners est tel que la fusion, et par conséquent, la soudure de la pastille semiconductrice se fera dans un temps de réponse équivalent à celui du disjoncteur différentiel.

La Figure 5 indique les phases du fonctionnement : écoulement, échauffement, fusion des zéners puis isolement par le disjoncteur

Si la surtension apparaît entre phase et terre, seul le groupe de zéners sur la ligne de cette phase est sollicité.

Si la surtension apparaît entre neutre et terre, seul le groupe de zéners sur la ligne du neutre est sollicité. Si la surtension apparaît entre deux phases, chaque groupe de zéners correspondant à chacune des phases deviendra conducteur lorsque la tension à ses bornes sera supérieure à son seuil et le courant de surtension s'établira à la terre mais la tension résiduelle à la sortie entre les deux phases sera le double de celle d'une surtension à la terre. Cet inconvénient n'est pas critique car les appareils électroniques supportent assez bien 800 V.

Ils sont d'autre part rarement branchés entre phases.

Pour que l'invention soit mieux comprise, nous décrivons, ci-dessous, une réalisation préférée de l'inventeur.

Nous décrivons la réalisation d'un ensemble particuliérement destiné à un secteur 220 V alternatif que nous appelons "fusadée".

Précisons que "fusadée" a fait l'objet d'un dépôt de marque en France sous le n° 547.163.

"Fusadée est un empilage de six diodes Zener montées tête-bêche suivant le schéma de la figure 7. Les caractéristiques de chaque diode sont identiques et sont les suivantes: tension de début d'avalanche 144 V — tension résiduelle maximum 176 V — pouvoir d'écoulement (onde de choc normalisée) 6,5 ampères — puissance de dissipation maxi en régime transitoire 1,5 KW.

Cet assemblage de diodes suivant figure 7 est disposé à l'intérieur de deux embouts (4 et 5) métalliques et cylindriques placés en vis-à-vis et sans contact. Chaque embout est connecté à une extrémité de la ligne des diodes Zener; ils sont destinés à jouer le rôle de cosse de raccordement. La tenue mécanique des embouts et de la ligne des zéners sont réalisées par un enrobage epoxy (6). Le "fusadée" ainsi réalisé a la forme d'un fusible classique et se loge dans un porte-fusible standard. Il ressort donc que le "fusadée" se présente sous une forme facilement amovible, facilitant d'une part son contrôle et d'autre part l'interchangeabilité du dispositif.

En définitive, les caractéristiques du "fusadée" ainsi réalisé sont les suivantes: tension du début d'avalanche 432 V — tension résiduelle maxi 528 V — pouvoir d'écoulement (onde de choc normalisée) 6,5 ampèrespuissance de dissipation maxi en régime transitoire 4,5 KW.

Le domaine de l'invention concerne particulièrement la protection de tous appareils électroniques alimentés à partir d'un réseau de distribution contre toute surtension externe induite. L'invention concerne particulièrement la protection des appareils domestiques.

**Revendications**

1°) Dispositif de protection contre la surtension dans un réseau de distribution électrique, comprenant des diodes Zener (3a, 3 b, 3c), montées entre chacun des conducteurs du réseau et la terre (2), ainsi qu'un disjoncteur différentiel (1) caractérisé en ce que les diodes Zener présentent un temps de réponse rapide et sont telles qu'une surtension de forte énergie sur ledit réseau électrique provoque nécessairement la soudure des diodes Zener qui l'écoulent vers la terre par fusion de leur pastille semiconductrice et que l'allure de la tension existant aux bornes de ces diodes Zener est dans ce cas du type représenté sur la figure 5 des dessins, de telle sorte que le courant écoulé vers la terre après fusion des diodes Zener est supérieur au seuil de déclenchement du disjoncteur différentiel.

2°) Dispositif selon la revendication 1, caractérisé en ce qu'un montage tête-bêche des diodes Zener est connecté entre chaque conducteur du réseau et la terre (2).

3°) Dispositif selon l'une des revendications 1 ou 2, caractérisé en ce que les diodes Zener montées entre un conducteur du réseau et la terre, sont disposées en ligne (3) à l'intérieur de deux embouts métalliques cylindriques (4,5) disposés en vis à vis et sans contact, chaque embout étant connecté à une extrémité de la ligne des diodes Zener, la tenue mécanique de l'ensemble étant réalisé par un enrobage de résine époxy (6) pour obtenir un ensemble facilement amovible (figure 6).

**Patentansprüche**

1. Schutzvorrichtung gegen Überspannung in einem elektrischen Verteilernnetz, welche Zenerdioden (3a, 3 b, 3c) hat, die zwischen jeden der Netzleiter und der Erde (2) montiert sind, sowie einen Differentialabschalter (1), der dadurch charakterisiert wird, dass die Zenerdioden eine sehr schnelle Antwortszeit haben und so sind, dass eine Überspannung von grosser Energie auf dem besagten elektrischen Netz nötigerweise die Verschweissung der Zenerdioden hervorruft, welche die Überspannung durch Schmelzung ihrer Halbleiterpastille der Erde zufliessen lassen, der Spannungslauf, welchen es an den Anschlussklemmen dieser Dioden gibt, ist in diesem Fall vom Typ, Welcher in figur 5 gezeigt wird, so dass der Strom, welcher nach der Verschweissung der Zenerdioden in die Erde fliesst, höher ist, als die Auslösungsschwelle des Differentialabschalters.

2. Vorrichtung nach Patentanspruch 1, dadurch charakterisiert, dass eine Kopf-an-Fuss-Montierung der Zenerdioden zwischen jede Leitung und der Erde geschaltet ist.

Vorrichtung nach einer der Patentansprüche 1 oder 2, dadurch charkterisiert, dass die Dioden, zwischen einem Netzleiter und der Erde eingebaut, in Linie angeordnet (3) sind, zwischen zwei zylindrischen Metallzwingen (4,5) vis à vis und kontaktlos angeordnet, wobei jede Zwinge an ein Ende der Zenerlinie geschaltet ist und die mechanische Haltung des Ganzen durch Ummantelung von Epoxyharz realisiert wird, um ein leicht bewegliches Teil (Figur 6) zu erhalten.

**Claims**

1° Protection system against over-voltage in an electric distribution network including Zener diodes (3a, 3b 3c) mounted between each of the network conductors and the earth (2) and a differential circuit-breaker (1) with such characteristics as Zener diodes respond within a short time resulting in Zener diodes being welded in any case of high energy over-voltage on the electric network, as diodes through which the current flows to the earth have their semiconductor chips melted, the voltage at the terminals of such diodes is in this case as shown in picture 5 so that the current that has run to the earth after Zener diodes have melted is higher than the release threshold of the differential circuit-breaker.

2° System as per claim 1, specifically featuring a head to tail mounting of zener diodes connected between each conductor and the earth.

3° System as per claim 1 or 2 specifically featuring diodes mounted between one conductor and the earth and positioned in a line (3) inside two cylindrical metal end caps (4, 5) that are face to face and not in contact, each end cap being connected to one end of the Zener line, the said whole system being mechanically fastened by epoxy resin (6) so that it can be easily removed (picture 6).

fig. 1

fig. 2

fig. 3

ENTREE

SORTIE

1

fig. 4

SORTIE

1000V

ECOULEMENT   ECHAUFFEMENT   ISOLEMENT

FUSION

500V

10⁻¹² 10⁻⁹ 10⁻⁶ 10⁻³   temps en seconde

fig. 5

fig. 6

3

fig. 7